# EUROPÄISCHE PATENTSCHRIFT

(11) **EP 0 575 706 B1**
(45) Veröffentlichungstag und Bekanntmachung des Hinweises auf die Patenterteilung: **25.09.1996**
(21) Anmeldenummer: 93105033.0
(22) Anmeldetag: 26.03.1993
(51) Int. Cl.: B66C 13/04, B64G 1/66, G12B 5/00

(54) **Justiervorrichtung**
Adjusting device
Dispositif d'ajustage

(30) Priorität: 24.06.1992 DE 4220634
(43) Veröffentlichungstag der Anmeldung: 29.12.1993
(73) Patentinhaber: Daimler-Benz Aerospace Aktiengesellschaft, 81663 München (DE)
(72) Erfinder: Voit, Arno, W-8164 Hausham (DE); Sperber, Franz, W-8208 Kolbermoor (DE)

(56) Entgegenhaltungen:
- GB-A- 806 889

## Beschreibung

Die Erfindung bezieht sich auf eine Vorrichtung zum Justieren eines Einbauteils an einem Träger in einer statisch bestimmten, bezüglich des Trägers dreiachsig rotatorisch und translatorisch einstellbaren Lage, nach dem Oberbegriff des Patentanspruchs 1.

Auf dem Gebiet der Raumfahrt sind Vorrichtungen dieser Art bekannt ("Space Shuttle Accommodation Handbook", Vol. XIV), die eine in allen sechs Freiheitsgraden einstellbare Verankerung einer Nutzlast im Laderaum eines Raumfahrzeuges mit Hilfe von nach Art einer Dreipunkt-Aufhängung angeordneten Befestigungseinheiten ermöglichen, die jeweils aus einer kombinierten, freigängig beweglichen Kugelgelenk-Schiebeverbindung mit starr an der Nutzlast befestigtem Schiebezapfen sowie einer zweiachsig translatorisch einstellbaren, zwischen Kugelgelenk und Laderaumwand wirksamen Kreuzschlittenanordnung bestehen. Wegen ihrer relativ geringen konstruktiven Steifigkeit müssen derartige Justiervorrichtungen im Hinblick auf eine genaue Fixierung des Einbauteils in der jeweiligen Justierposition aus massiven Bauteilen hergestellt sein und erfordern einen gerade in der Raumfahrt nicht annehmbären Platz- und Gewichtsaufwand.

Aufgabe der Erfindung ist es deshalb, eine Vorrichtung der eingangs genannten Art so auszubilden, daß sie eine hohe konstruktive Steifigkeit besitzt und auf baulich einfache, gewichts- und platzsparende Weise eine exakte, lagestabile Justierung des Einbauteils bezüglich des Trägers ermöglicht.

Diese Aufgabe wird erfindungsgemäß durch die im Patentanspruch 1 gekennzeichnete Justiervorrichtung gelöst.

Erfindungsgemäß werden die Justierbewegungen des Einbauteils in allen sechs Freiheitsgraden ausschließlich durch drehpositionierbare, paarweise miteinander zusammenwirkende Scheibenelemente bewirkt, die aufgrund der in Richtung ihrer Flächenerstreckung großen, homogenen Eigensteifigkeit und ihrer Anordnung in der Justierebene der Anschlußteile eine hochgradig laststabile Verkoppelung zwischen Einbauteil und Träger und eine äußerst flache Bauweise mit sehr geringem Platz- und Gewichtsaufwand aus wenigen, einfach zu fertigenden Bauelementen garantieren, mit dem zusätzlichen kinematischen Vorteil, daß sich bei einer Verdrehung der Scheibenelemente ohne Drehrichtungsumkehr selbsttätig eine reversierende, translatorische Justierbewegung zwischen den Anschlußteilen der einzelnen Justiereinheiten ergibt.

Im Hinblick auf eine weitere bauliche Vereinfachung und laststabilere Lagerung sind die Primär- und die Sekundärscheibe der Doppelscheibenanordnung gemäß Anspruch 2 vorzugsweise durch ein jeweils den Scheibenaußenumfang ringförmig umschließendes Lager gegenseitig bzw. an dem einen Anschlußteil drehbar angeordnet, und gemäß Anspruch 3 sind die den Scheibenaußenrand umschließenden Lagerstellen zweckmäßigerweise beidseitig formschlüssig ausgebildet, wodurch die Steifigkeit und Justiergenauigkeit der Doppelscheibenanordnung weiter erhöht werden. Aus dem gleichen Grund sind die Primär- und die Sekundärscheibe gemäß Anspruch 4 vorzugsweise koplanar zueinander angeordnet.

Um die Anschlußteile mittels der Drehscheibenanordnung auf jeden beliebigen Punkt innerhalb einer Vollkreisfläche relativ zueinander einstellen zu können, empfiehlt es sich gemäß Anspruch 5, den Abstand zwischen der Drehachse der Sekundärscheibe und dem an dieser angeordneten Anschlußteil im wesentlichen gleich groß wie die Exzentrizität zwischen den Scheiben-Drehachsen zu wählen.

Um die Doppelscheibenanordnung mehrmals zu Justierzwecken verwenden zu können, ist diese gemäß Anspruch 6 vorzugsweise im Justierzustand ausbaubar und gegen eine nach der Relativlage der Anschlußteile maßgenau gefertigte, endmontierte Befestigungseinheit austauschbar.

In besonders bevorzugter Ausgestaltung der Erfindung verbleiben die Justiereinheiten jedoch nach Anspruch 7 zur endgültigen Befestigung zwischen Einbauteil und Träger, wobei die Doppelscheibenanordnungen in der Justierposition drehfest verriegelt werden. Die Verriegelung ist gemäß Anspruch 8 mit besonderem Vorteil lösbar ausgebildet, so daß die Doppelscheibenanordnungen im Einbauzustand eine Nachjustierung des Einbauteils bezüglich des Trägers ermöglichen. In besonders bevorzugter Weise sind die Doppelscheibenanordnungen gemäß Anspruch 9 motorisch drehlageneinstellbar angetrieben, so daß die Justiereinheiten problemlos sowohl in schlecht zugänglicher Einbaulage als auch drahtlos ferngesteuert, z.B. im Orbit, ein- bzw. nachgestellt werden können.

Im Hinblick auf eine besonders platzsparende und herstellungsgünstige Bauweise ist das eine Anschlußteil gemäß Anspruch 10 vorzugweise unmittelbar starr am Träger befestigt, während das andere als kombinierte Kugelgelenk-Schiebeverbindung mit starr am Einbauteil befestigtem Schiebezapfen ausgebildet ist.

Nach Anspruch 11 sind die jeweils für die freie Translationsbewegung vorgesehenen Schiebeachsen der einzelnen Justiereinheiten zweckmäßigerweise auf einen gemeinsamen Schnittpunkt ausgerichtet, wodurch auf sehr einfache Weise eine wärmespannungsfreie Aufhängung des Einbauteils am Träger erreicht wird.

Wegen des kinematisch im allgemeinen komplizierten Zusammenhangs zwischen den Drehlagenänderungen der einzelnen Primär- und Sekundärscheiben und den daraus resultierenden Rotations- und Translationsbewegungen des Einbauteils in einem trägerfesten Bezugskoordinatensystem empfiehlt es sich schließlich gemaß Anspruch 12, die Drehlagen-Einstellbewegungen der Primär- und Sekundärscheiben der Justiereinheiten rechnergestützt zu korrelieren.

Die Erfindung wird nunmehr anhand eines Ausführungsbeispiels in Verbindung mit den Zeichnungen näher erläutert. Es zeigen in stark schematisierter Darstellung:
- **Fig. 1**: eine teilweise geschnittene Ansicht einer aus drei, zwischen Einbauteil und Träger angeordneten Justiereinheiten bestehenden Justiervorrichtung;
- **Fig. 2**: die Aufsicht einer der Doppelscheibenanordnungen; und
- **Fig. 3**: einen Schnitt längs der Linie III-III der Fig. 2.

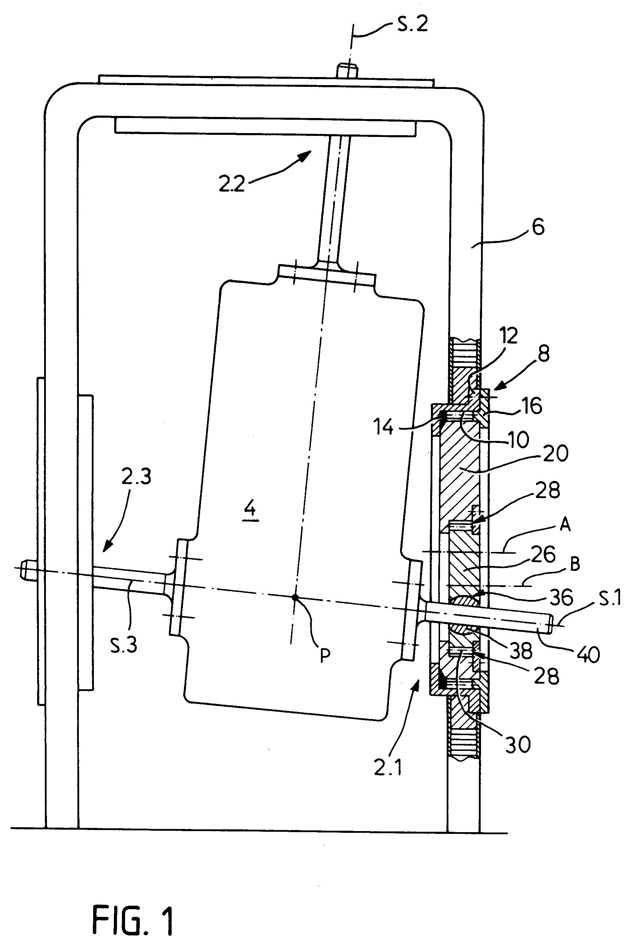

Fig. 1 zeigt eine aus den drei Justiereinheiten 2.1, 2.2 und 2.3 bestehende Justiervorrichtung, über die ein Einbauteil 4, z.B. die plattenförmige Basis einer Antennen-Speiseeinheit in einer statisch bestimmten Lage dreiachsig rotatorisch und translatorisch justierbar an einem starren Träger 6, z.B. der in Sandwichbauweise ausgeführten Tragstruktur einer Reflektorantenne, aufgehängt ist.

Jede Justiereinheit 2 enthält ein mit der Tragstruktur 6 starr verbundenes, etwa verschraubtes Anschlußteil 8, welches aus einem topfförmigen, mit einer Innenverzahnung 10 versehenen Ringflansch 12 mit einem geteilten Lagerring 14 sowie einem ringförmigen Lagerdeckel 16 mit einer Winkelgradskala 18 besteht und ein Drehlager für eine kreisförmige Primärscheibe 20 bildet, durch das die Primärscheibe 20 am Außenrand koplanar zur Tragstruktur 6 um die zentrale Scheibenachse A drehbar und senkrecht zur Scheibenebene beidseitig über den gesamten Scheibenaußenumfang formschlüssig am Anschlußteil 8 bzw. der Tragstruktur 6 gelagert ist.

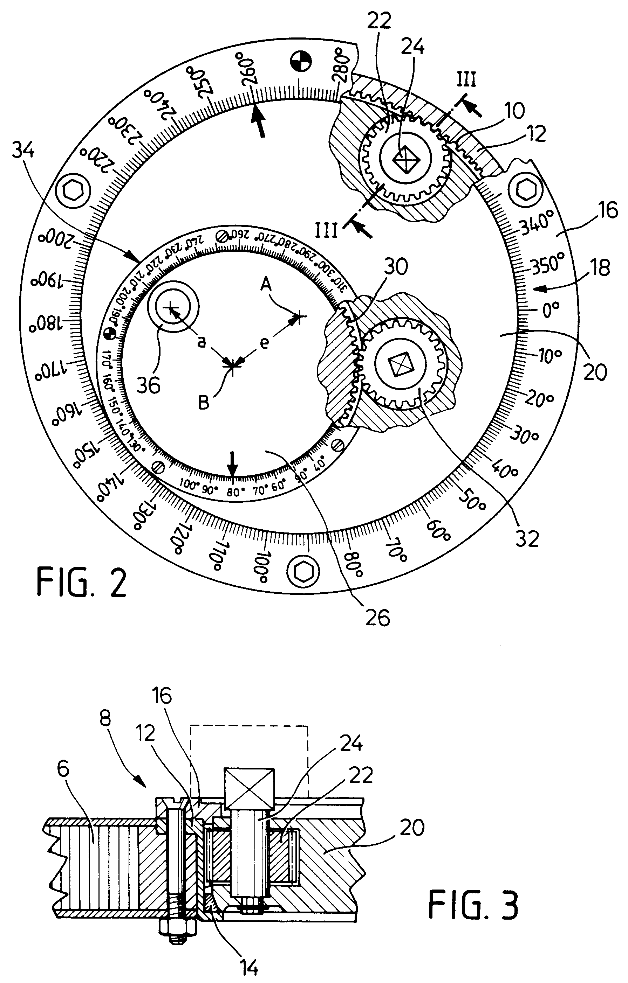

Zur Einjustierung der Primärscheibe 20 auf eine mit Hilfe der Skala 18 ablesbare Drehposition dient ein am Scheibenkörper gelagertes, mit der Innenverzahnung 10 des Ringflansches 12 kämmendes Ritzel 22 (Fig. 3) mit einer entweder von Hand, vorzugsweise aber mit Hilfe des in Fig. 3 gestrichelt angedeuteten motorischen Antriebs verdrehbaren Ritzelwelle 24. Gegen ungewollte Drehlagenänderungen bezüglich des Anschlußteils 8 unter Last ist die Primärscheibe 20 durch Reibschluß oder eine andere, bei Betätigung des Ritzels 22 selektiv lösbare Arretierung (nicht gezeigt) gesichert.

Koplanar zur Scheibenebene ist in einer entsprechenden Aussparung innerhalb des Außenumfangs der Primärscheibe 20 eine kreisförmige Sekundärscheibe 26 angeordnet, die - in gleicher Weise wie die Primärscheibe 20 am Anschlußteil 8 - mittels eines den Außenumfang der Sekundärscheibe 26 umgreifenden Drehlagers 28 an der Primärscheibe 20 um die zentrale, zur Drehachse A im Abstand e exzentrisch verlaufende Scheibenachse B drehbar und beidseitig formschlüssig gelagert ist. Die Sekundärscheibe 26 ist mit einer Außenverzahnung 30 versehen und über ein an der Primärscheibe 20 gelagertes, vorzugsweise wiederum motorisch angetriebenes Ritzel 32 auf eine an der Winkelgradskala 34 ablesbare Drehposition bezüglich der Primärscheibe 20 einjustierbar.

Im Abstand a zur Sekundärscheibenachse B, welcher etwa ebenso groß wie die Achsexzentrizität e ist, befindet sich an der Sekundärscheibe 26 ein zweites Anschlußteil 36 in Form einer Kugelschale, die gemeinsam mit der damit zusammenwirkenden Gelenkkugel 38 ein frei winkelbewegliches Kugelgelenk für einen in der Gelenkkugel 38 axial frei verschieblichen Schiebezapfen 40 bildet, welcher starr am Einbauteil 4 befestigt ist. Die Schiebezapfen 40 der einzelnen Justiereinheiten 2 sind derart am Einbauteil 4 positioniert, daß ihre Schiebeachsen S.1, S.2 und S.3 jeweils um etwa 90° zueinander versetzt sind und einen gemeinsamen Schnittpunkt P aufweisen.

Durch eine Drehlagenänderung der Primär- und/oder Sekundärscheiben 20, 26 läßt sich jedes Anschlußteil 36 bezüglich des zugeordneten Anschlußteils 8 in der Ebene der Doppelscheibenanordnung 20, 26 zweiachsig translatorisch auf jede beliebige Position innerhalb einer zur Primärscheibe 20 nahezu flächengleichen Vollkreisfläche einjustieren und hierdurch die räumliche Lage des Einbauteils 4 bezüglich des Trägers 6 in bestimmten Grenzen in allen sechs Freiheitsgraden verändern. Wegen des rechnerisch relativ aufwendigen Zusammenhangs zwischen einer dreiachsig rotatorisch und translatorisch vorbestimmten Einstellage des Einbauteils 4 in einem trägerfesten Bezugssystem und den hierfür erforderlichen Winkeljustierungen der einzelnen Primär- und Sekundärscheiben 20, 26 empfiehlt es sich, die Winkelpositionen sämtlicher Einzelscheiben 20, 26 aller drei Justiereinheiten 2 und die korrespondierende, räumliche Einstellage des Einbauteils 4 rechnergestützt miteinander zu korrelieren.

Die lösbare Verankerung der Justiereinheiten 2 am Träger 6 bietet die Möglichkeit, die Doppelscheibenanordnungen 20, 26 zusammen mit den Anschlußteilen 8, 36 nach dem Justieren des Einbauteils 4 auszubauen und jeweils gegen eine nach der Relativlage der Anschlußteile 8, 36 maßgenau gefertigte, einstückige Befestigungsplatte auszutauschen, die einbaugleich zur Doppelscheibenanordnung 20, 26 am Träger 6 endmontiert wird. In Anwendungsfällen jedoch, wo die Einstellage des Einbauteils 4 bezüglich des Trägers 6 nachträglich geändert oder korrigiert werden muß, verbleiben die Justiereinheiten zur endgültigen Befestigung des Einbauteils 4 am Träger 6, um eine Nachjustierung, etwa ferngesteuert mit Hilfe der Ritzel-Antriebsmotoren, zu ermöglichen.

## Patentansprüche

1. Vorrichtung zum Justieren eines Einbauteils (4) an einem Träger (6) in einer statisch bestimmten, bezüglich des Trägers (6) dreiachsig rotatorisch und translatorisch einstellbaren Lage, mit mindestens drei versetzt zueinander zwischen Träger (6) und Einbauteil (4) angeordneten Justiereinheiten (2), von denen jede zwei relativ zueinander zweiachsig translatorisch justierbare Anschlußteile (8, 36) enthält und dreiachsig rotatorisch sowie einachsig geneigt zur Justierebene der Anschlußteile (8, 36) translatorisch frei beweglich ausgebildet ist,
**dadurch gekennzeichnet,** daß
die beiden Anschlußteile (8, 36) durch eine Doppelscheibenanordnung (20, 26) zweiachsig justierbar miteinander verkoppelt sind, welche eine in der Justierebene der Anschlußteile drehlageneinstellbar am einen Anschlußteil (8) gelagerte Primärscheibe (20) und eine von der Primärscheibe umschlossene, um eine zu deren Drehachse (A) exzentrische Achse (B) drehlageneinstellbar an der Primärscheibe gelagerte Sekundärscheibe (26) enthält, an welcher das andere Anschlußteil (36) im Abstand (a) zur Drehachse (B) der Sekundärscheibe angeordnet ist.

2. Vorrichtung nach Anspruch 1
**dadurch gekennzeichnet,** daß
die Sekundärscheibe (26) an der Primärscheibe (20) und diese an dem einen Anschlußteil (8) jeweils über ein den Scheibenaußenumfang ringförmig umschließendes Lager (12, 14, 16; 28) drehbar angeordnet ist.

3. Vorrichtung nach Anspruch 1 oder 2,
**dadurch gekennzeichnet,** daß
zwischen der Primärscheibe (20) und dem einen Anschlußteil (8) und zwischen beiden Scheiben (20, 26) eine über den gesamten Scheibenaußenrand beidseitig wirksame Formschlußverbindung (12, 16) vorgesehen ist.

4. Vorrichtung nach einem der vorhergehenden Ansprüche,
**dadurch gekennzeichnet,** daß
die Sekundärscheibe (26) in der Scheibenebene der Primärscheibe (20) an dieser drehbar gelagert ist.

5. Vorrichtung nach einem der vorhergehenden Ansprüche,
**dadurch gekennzeichnet,** daß
der Abstand (a) zwischen der Drehachse (B) der Sekundärscheibe (26) und dem an dieser angeordneten Anschlußteil (34) im wesentlichen gleich der Exzentrizität (e) der Scheiben-Drehachsen (A, B) ist.

6. Vorrichtung nach einem der vorhergehenden Ansprüche,
**dadurch gekennzeichnet,** daß
die Doppelscheibenanordnung (20, 26) ausbaubar und gegen eine nach der Relativlage der Anschlußteile (8, 36) in der Justierposition der Doppelscheibenanordnung maßgenau gefertigte, endmontierte Befestigungseinheit austauschbar ist.

7. Vorrichtung nach einem der Ansprüche 1 bis 5,
**dadurch gekennzeichnet,** daß
die Justiereinheiten (2) unter drehfester Verriegelung der Doppelscheibenanordnung (20, 26) in der Justierposition zur endgültigen Befestigung des Einbauteils (4) am Träger (6) vorgesehen sind.

8. Vorrichtung nach Anspruch 7,
**dadurch gekennzeichnet,** daß
die Doppelscheibenanordnungen (20, 26) im endgültigen Einbauzustand nachjustierbar sind.

9. Vorrichtung nach einem der vorhergehenden Ansprüche,
**dadurch gekennzeichnet,** daß
die Doppelscheibenanordnungen (20, 26) motorisch drehlageneinstellbar angetrieben sind.

10. Vorrichtung nach einem der vorhergehenden Ansprüche,
**dadurch gekennzeichnet,** daß
das eine Anschlußteil (8) unmittelbar starr am Träger (6) befestigt und das andere Anschlußteil (36) an einer kombinierten Kugelgelenk-Schiebeverbindung (36, 38, 40) mit starr am Einbauteil (4) befestigten Schiebezapfen (40) angeordnet ist.

11. Vorrichtung nach einem der vorhergehenden Ansprüche,
**dadurch gekennzeichnet,** daß
die jeweils für die freie Translationsbewegung vorgesehenen Schiebeachsen (S.1, S.2, S.3) der einzelnen Justiereinheiten (2) einen gemeinsamen Schnittpunkt (P) besitzen.

12. Vorrichtung nach einem der vorhergehenden Ansprüche,
**dadurch gekennzeichnet,** daß
die Drehlagen-Einstellbewegungen der Primär- und Sekundärscheiben (20, 26) der Justiereinheiten (2) rechnergestützt koordiniert sind.

## Claims

1. Device for adjusting an assembly component (4) on a support (6) in a position which is statically specified and adjustable relative to the support (6) in a three-axial rotary and translatory adjustable position, comprising at least three adjustment elements (2), which are offset relative to each other between support (6) and assembly component (1), each two of which contain two connecting elements (8, 36), which are arranged to be two-axially translatorily adjustable relative to each other and translatorily freely displaceable and three-axially rotationally as well as uni-axially slanted towards the adjustment plane of the connecting elements (8, 36), **characterized in that** the two connecting elements (8, 36) are interconnected by a double-disc arrangement (20, 26), so as to be bi-axially adjustable relative to each other, which includes a primary disc (20), which is mounted on a connecting element (8) so as to be adjustable in its rotary position in the adjustment plane of the connecting elements, and a secondary disc (26), which is encased by the primary disc and mounted on the primary disc so as to be adjustable relative to its rotary position around an axis (B), which is eccentric to its rotary axis (A), and on which the other connecting element (36) is arranged at a distance (a) from the rotary axis (B) of the secondary disc.

2. Device according to Claim 1, **characterized in that** the secondary disc (26) is rotatingly arranged on the primary disc (20), and the latter on the one connecting element (8) above a respective mounting (12, 14, 16; 28) which annularly encases the outer periphery of the disc.

3. Device according to Claim 1 or 2, **characterized in that** between the primary disc (20) and the one connecting element (8) and between both discs (20, 26) is provided a positive connection (12, 16) which is operative over the entire outside disc edge on both sides.

4. Device according to one of the above claims, **characterized in that** the secondary disc (26) is mounted in the disc plane of the primary disc (20) so as to be rotatable on it.

5. Device according to one of the above claims, **characterized in that** the distance (a) between the rotary axis (B) of the secondary disc (26) and a thereat arranged connecting element (34) essentially equals the eccentricity (e) of the disc rotary axes (A, B).

6. Device according to one of the above claims, **characterized in that** the double-disc arrangement (20, 26) can be dismantled and replaced by an end-mounted attachment unit which is made to measure according to the relative position of the connecting elements (8, 36) in the adjustment position of the double disc arrangement.

7. Device according to one of Claims 1 to 5, **characterized in that** the adjustment units (2) are provided under non-rotational locking of the double disc arrangement (20, 26) in the adjustment position of final fixing of the assembly part (4) on the carrier (6).

8. Device according to Claim 7, **characterized in that** the double disc arrangements (20, 26) can be re-adjusted in the final assembly state.

9. Device according to one of the above claims, **characterized in that** the double disc arrangements (20, 26) are driven by a motor with rotary position adjustment.

10. Device according to one of the above claims, **characterized in that** the one connecting element (8) is directly and rigidly mounted on the carrier (6), and the other connecting element (36) is arranged on a combined ball-joint slide connection (36, 38, 40) with slide pins (40) which are rigidly mounted on the assembly element (4).

11. Device according to one of the above claims, **characterized in that** the slide axes (S.1, S.2, S.3) of the individual adjustment units (2) as provided for respective free translatory movement have a common intersecting point (P).

12. Device according to one of the above claims, **characterized in that** the rotary position setting movements of the primary and secondary discs (20, 26) of the adjustment elements (2) are computer co-ordinated.

## Revendications

1. Dispositif pour le réglage d'un élément (4) sur un support (6), dans une position statiquement déterminée, ajustable en rotation et en translation suivant trois axes par rapport au support (6), avec au moins trois unités de réglage (2) mutuellement décalées, disposées entre le support (6) et l'élément (4), qui comprennent chacune deux éléments de liaison (8, 36) réglables l'un par rapport à l'autre en translation suivant deux axes et peuvent se déplacer librement en rotation suivant trois axes et en translation suivant un axe, dans une direction inclinée par rapport au plan de réglage des éléments de liaison (8, 36), caractérisé par le fait que les deux éléments de liaison (8, 36) sont couplés l'un à l'autre, avec possibilité de réglage suivant deux axes, par un dispositif à disque double (20, 26) comprenant un disque primaire (20) qui est monté sur l'élément de liaison (8) avec possibilité de réglage en rotation, dans le plan de réglage des éléments de liaison, et un disque secondaire (26) qui est entouré par le disque primaire, est monté sur le disque primaire avec possibilité de réglage en rotation autour d'un axe (B) excentré par rapport à l'axe de rotation (A) dudit disque primaire, et sur lequel l'autre élément de liaison (36) est disposé à une distance (a) de l'axe de rotation (B) du disque secondaire.

2. Dispositif selon la revendication 1, caractérisé par le fait que le disque secondaire (26) est monté tournant sur le disque primaire (20) et ce dernier est monté tournant sur un élément de liaison (8) par l'intermédiaire chaque fois d'un palier (12, 14, 16; 28) qui entoure à la manière d'un anneau la surface extérieure du disque.

3. Dispositif selon la revendication 1 ou 2, caractérisé par le fait qu'il est prévu entre le disque primaire (20) et l'élément de liaison (8) et entre les deux disques (20, 26) une liaison par obstacles (12, 16) qui agit des deux côtés sur tout le bord extérieur du disque.

4. Dispositif selon l'une des revendications précédentes, caractérisé par le fait que le disque secondaire (26) est monté dans le plan du disque primaire (20) avec possibilité de rotation sur celui-ci.

5. Dispositif selon l'une des revendications précédentes, caractérisé par le fait que la distance (a) entre l'axe de rotation (B) du disque secondaire (26) et l'élément de liaison (34) monté sur celui-ci est sensiblement égale à l'excentricité (e) des axes de rotation (A, B) des disques.

6. Dispositif selon l'une des revendications précédentes caractérisé par le fait que le dispositif à disque double (20, 26) est démontable et peut être remplacé par une unité de fixation fabriquée et assemblée avec une grande précision en fonction de la position relative des éléments de liaison (8, 36) dans la position réglée du dispositif à disque double.

7. Dispositif selon l'une des revendications 1 a 5, caractérisé par le fait que les unités de réglage (2) sont pourvues d'un verrouillage en rotation du dispositif à disque double (20, 26) dans la position réglée aux fins de fixer définitivement l'élément (4) sur le support (6).

8. Dispositif selon la revendication 7, caractérisé par le fait que les dispositifs à disque double (20, 26) peuvent subir un réglage supplémentaire dans leur état de montage définitif.

9. Dispositif selon l'une des revendications précédentes, caractérisé par le fait que les dispositifs à disque double (20, 26) sont entraînés par moteur avec possibilité de réglage angulaire.

10. Dispositif selon l'une des revendications précédentes, caractérisé par le fait que l'élément de liaison (8) est fixé directement et rigidement sur le support (6) et l'autre élément de liaison (36) est disposé sur un élément combiné à rotule et coulisse (36, 38, 40) avec une tige coulissante (40) qui est fixée rigidement à l'élément (4).

11. Dispositif selon l'une des revendications précédentes, caractérisé par le fait que les axes (S.1, S.2, S.3) de coulissement des différentes unités de réglage (2) prévus pour un déplacement en translation ont un point d'intersection (P) commun.

12. Dispositif selon l'une des revendications précédentes, caractérisé par le fait que les mouvements de réglage de la position angulaire des disques (20, 26) primaires et secondaires des unités de réglage (2) sont coordonnés de manière assistée par ordinateur.
